# EUROPÄISCHE PATENTSCHRIFT

(11) **EP 2 503 106 B1**
(45) Veröffentlichungstag und Bekanntmachung des Hinweises auf die Patenterteilung: **23.07.2014**
(21) Anmeldenummer: 12160676.8
(22) Anmeldetag: 22.03.2012
(51) Int. Cl.: F01D 25/08, F02C 3/34, F02C 6/18, F02C 7/04, F02C 7/143, F01K 17/02

(54) **Verfahren zum Betrieb eines Gasturbinenkraftwerks mit Abgasrezirkulation und sauerstoffarmen Kühlgas**
Method for operating a gas turbine power plant with flue gas recirculation and oxygen-depleted cooling gas
Procédé de fonctionnement d'une centrale électrique avec le recyclage des gaz de combustion et gaz de refroidissement pauvre en oxygène

(30) Priorität: 22.03.2011 CH 4822011
(43) Veröffentlichungstag der Anmeldung: 26.09.2012
(60) Teilanmeldung: 13195346.5
(73) Patentinhaber: Alstom Technology Ltd, 5400 Baden (CH)
(72) Erfinder: Hellat, Jaan, 5406 Baden-Rütihof (CH); Rofka, Stefan, 5415 Nussbaumen (CH); Hövel, Michael, 5408 Ennetbaden (CH); Benz, Eribert, 5413 Birmenstorf (CH); Burdet, Andre, 1752 Villars sur Glane (CH); Sander, Frank, 5415 Rieden AG (CH); Guethe, Felix, 4056 Basel (CH)

(56) Entgegenhaltungen:
- EP-A1- 1 621 741
- EP-A2- 0 887 530
- EP-A2- 1 223 382
- EP-A2- 2 208 876
- DE-A1-102008 002 870
- JP-A- 2003 343 213
- US-A1- 2007 033 918

## Beschreibung

### TECHNISCHES GEBIET

Die vorliegende Erfindung betrifft ein Verfahren zum Betrieb eines Gasturbinenkraftwerkes mit Abgasrezirkulation in dem ein sauerstoffarmes Gas zur Kühlung der Heissgasteile benutzt wird.

### STAND DER TECHNIK

Die Rezirkulation von Abgasen ist eine Technologie, welche grundsätzlich für unterschiedlichste Zwecke bei Gasturbinen eingesetzt werden kann. So beispielsweise für die Kontrolle der Emissionen, für die Reduktion des Abgasvolumens für die Kohlendioxid-Abscheidung etc. Bei der Rezirkulation von Abgasen bei einer Gasturbine wird ein wesentlicher Anteil des Abgases aus dem gesamten Abgasstrom abgezweigt und wird normalerweise, nach Kühlung und Reinigung, dem Eingangsmassenstrom der Turbine respektive dem Kompressor der Turbine wieder zugeführt, wobei der rückgeführte Abgasstrom mit frischer Luft aus der Umgebung vermischt wird, und diese Mischung anschliessend dem Kompressor zugeführt wird.

Vorteilhaft kann durch Abgasrezirkulation der Kohlendioxid- Partialdruck in den Abgasen erhöht werden, um die Leistungsverluste und Wirkungsgradverluste von Kraftwerken mit Kohlendioxid-Abscheidung zu reduzieren. Weiter ist Abgasrezirkulation mit dem Ziel vorgeschlagen worden, den Sauerstoffgehalt in den Ansauggasen von Gasturbinen zu reduzieren, um dadurch die NOx-Emissionen zu reduzieren.

Zur Abgasrezirkulation beschreibt beispielsweise die US 7536252 B1 ein Verfahren zum Steuern eines Abgasrezirkulationsstroms einer Turbomaschine, der über ein Abgasrezirkulationssystem zu dem Einlass der Turbomaschine zurückgeführt wird. Bei diesem Verfahren wird ein Soll-Abgasrezirkulationsanteil bestimmt, der den Anteil des Abgasstroms an dem Eintrittsstrom der Turbomaschine beinhaltet, und der Ist-Wert auf den Soll- Wert eingestellt wird.

Aus der EP2248999 ist ein Kraftwerk mit Abgasrezirkulation sowie ein Verfahren zum Betrieb eines derartigen Kraftwerks bekannt, indem lastabhängig die Rezirkulationsrate und die Temperatur auf die die rezirkulierten Abgase rückgekühlt werden geregelt wird.

Typischerweise ist es vorteilhaft eine möglichst hohe Rezirkulationsrate zu erzielen. Die Rezirkulationsrate wird typischerweise durch die Anforderungen der Brennkammer begrenzt, da sonst der Sauerstoffgehalt der Brenngase zu tief wird und eine vollständige, CO und UHC (unburned hydrocarbon) freie Verbrennung nicht gewährleistet werden kann.

Im Stand der Technik wird, um bei niedrigem Sauerstoffgehalt der Brenngase eine gute Verbrennung zu gewährleisten, die Frischluft mit den rezirkulierten Abgasen möglichst gut vermischt, um bei Brennkammereintritt ein homogenes Gasgemisch zur Verfügung zu stellern. Ein zur druckverlustarmen Vermischung von Frischluft mit rezirkulierten Abgasen geeigneter Mischer ist beispielsweise aus der WO2010/142573 A2 bekannt.

Trotz Zuführung eines homogenen Gasgemisches ist der Restsauerstoffgehalt der Abgase einer derartigen Anlage noch relativ hoch, da bei herkömmlichen Gasturbinen sauerstoffhaltige Gase durch das Kühlluftsystem an die Brennkammer vorbeigeführt wird und in der Turbine oder in der Brennkammer als Kühlluft zugeführt wird, ohne dass der darin enthaltende Sauerstoff zur Verbrennung genutzt werden kann.

Die EP 2 208 876 A2 beschreibt eine Gasturbine mit Abgasrezirkulation bei der der von der Turbine angetriebene Verdichter nur rezirkulierte Abgase verdichtet und frische Ansaugluft über einen separaten, motorgetrieben Verdichter verdichtet wird.

Aus der DE 10 2008 002870 A1 ist ein Verfahren bekannt in dem eine Gasturbine mit Abgasrezirkulation betrieben wird, bei dem bis zu 50% der Abgase in den Ansaugstrom rezirkuliert werden.

Die EP 0 887 530 A2 offenbaret eine Gasturbine mit Abgasrezirkulation und Wassereinspritzung in den Verdichter, wobei das Wasser im Verdichter verdampft und in gasförmiger Phase mit der Kühlluft in das offene Kühlsystem gelangen kann.

Die JP2003 343213 A offenbart ein Kombikraftwerk, dessen Gasturbine im Heissgasbereich mit Dampf gekühlt wird.

Die EP 1 621 741 A1 zeigt eine Gasturbine mit einem Verdichtereinlass und den Strömungskanal bis zur Verdichter.

### DARSTELLUNG DER ERFINDUNG

Der vorliegenden Erfindung ist die Aufgabe gestellt, ein Verfahren zum zuverlässigen Betrieb eines Gasturbinenkraftwerkes mit Abgasrezirkulation und einem offenen Kühlsystem für Heissgasteile anzugeben, bei dem der Restsauerstoff der Abgase minimiert wird.

Erfindungsgemäss wird diese Aufgabe durch den Gegenstand des unabhängigen Anspruchs gelöst. Der Kern der Erfindung ist ein Verfahren, bei welchem in einem offenen Kühlsystem für Heissgasteile der Gasturbine sauerstoffarmes Gas verwendet wird. Als sauerstoffarmes Gas wird dabei ein Gas bezeichnet, welches eine Sauerstoffkonzentration hat, die kleiner als die mittlere Sauerstoffkonzentration des Verdichteransaugstroms ist.

Diesem Verfahren zum Betrieb eines Gasturbinenkraftwerkes mit Abgasrezirkulation, welches eine Gasturbine, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt, umfasst, zeichnet sich dadurch aus, dass Kühlung von Heissgasteilen der Gasturbine ein sauerstoffarmes Gas in einem offenen Kühlsystem verwendet wird.

Während durch dies Verfahren die Zumischung von sauerstoffreichem Kühlgas in den Heissgaskanal vermieden wird, wird gleichzeitig die Sauerstoffkonzentration der Gase, die die Brennkammer erreichen gegenüber herkömmlichen Verfahren erhöht. Dies erlaubt die Verwendung von einem gegenüber dem Stand der Technik erhöhten Verhältnis von Frischluft zu rezirkuliertem Abgas. Insgesamt kann so der Sauerstoffgehalt in den Abgasen reduziert, der CO2-Gehalt erhöht werden und der Abgasmassenstrom, der das Kraftwerk verlässt und aus dem CO2 abgeschieden wird, reduziert werden. Der reduzierte Abgasmassenstrom erlaubt eine Reduktion der Anlagengrösse. Der höhere CO2 Gehalt führt zu einer effektiveren Abscheidung mit reduziertem Hilfsenergieverbrauch für die CO2-Abscheidung und damit einer höheren Nettoleistung und höherem Nettowirkungsgrad des Kraftwerks.

Beispielsweise wird in dem Verfahren ein Gasgemisch zur Kühlung von Heissgasteilen genutzt, das zu über 50% aus Abgasen der Gasturbine besteht.

Alternativ oder in Kombination wird in dem Verfahren Dampf als Kühlgas verwendet. Der Dampf wird typischerweise dem Wasserdampfkreislauf des Gasturbinenkraftwerkes entnommen. Es kann aber auch Dampf aus externen Quellen genutzt werden. Durch die Verwendung Dampf oder Zumischung von Dampf in das Kühlgassystem wird ebenfalls die Zufuhr von sauerstoffhaltigem Gas nach der Brennkammer reduziert.

Gemäss einer Ausführungsform des Verfahren wird der erste Abgasstrom ohne Vermischung mit Frischluft in den Verdichtereinlass rezirkuliert und zur Kühlung von Heissgasteilen mindestens ein Teil des in dem Verdichter komprimierten oder Teilkomprimierten ersten Abgasstroms als Kühlgas abzweigt. Das abgezweigte Kühlgas wird direkt oder nach Rückkühlung dem offenen Kühlsystem der Heissgasteile zugeführt. Frischluft ist typischerweise Umgebungsluft, die je nach Standort der Gasturbine durch Luftfilter gereinigt ist.

In einer weiteren Ausgestaltung des Verfahren werden dem Verdichter der erste Abgasstrom und die Frischluft radial gestuft zugeführt.

Gemäss einer Ausführungsform des Verfahren wird eine radiale Stufung dadurch realisiert, dass dem Verdichter der erste Abgasstrom und die Frischluft über einen geteilten Verdichtereinlass, dessen Zuführungskanäle vor Verdichtereintritt die Form von konzentrischen Kreisringen aufweiss, zugeführt werden.

Eine weitere Ausführungsform ist dadurch gekennzeichnet, dass dem Verdichter die Frischluft über einen inneren Kreisring und der erste Abgasstrom über einen äusseren Kreisring zugeführt wird.

In einem alternativen Verfahren wird der erste Abgasstrom vor dem Verdichterdichtereintritt über eine Vielzahl von Zuführungen, die auf einem zur Achse der Gasturbine konzentrischen Ring in Umfangsrichtung angeordnet sind, in den Ansaugstrom eingeleitet.

Bei homogener Zuströmung der Frischluft wird der erste Abgasstrom beispielsweise über eine Vielzahl von Zuführung, die in Umfangsrichtung gleichmässig verteilt angeordnet sind, mit jeweils gleichem Durchfluss in den Ansaugstrom rezirkuliert.

Da der Verdichtereinlass einer Gasturbine typischerweise mit fester Geometrie gebaut ist, ist das Flächenverhältnis der Eintrittsflächen für Frischluft und ersten Abgasstrom konstant und entsprechend der Auslegungsbedingungen der Gasturbine gewählt, d.h. es entspricht dem Verhältnis von Frischluft zu rezirkuliertem Abgas bei Auslegungsbedingung. Sobald die Gasturbine nicht bei Auslegungsbedingungen betrieben wird, ändert sich das Verhältnis von Verhältnis von Frischluft zu rezirkuliertem Abgas, dass zu einem optimalen Betrieb führt. Typischerweise werden als Auslegungsbedingung Volllast gewählt. Zum Start des Gasturbinenkraftwerks und bei Teillast ist wird in diesem Fall beispielsweise weniger Abgas rezirkuliert. Um trotzdem eine homogene Zuströmung zu dem Verdichter zu realisieren, wird in einer weiteren Ausführung des Verfahren bei Teillast und/ oder beim Start der Gasturbine Frischluft über ein Regelelement dem ersten Abgasstrom zugemischt wird, bevor dieser in den Verdichter eingeleitet wird.

Ein Gasturbinenkraftwerk zur Durchführung des Verfahrens mit Abgasrezirkulation umfasse eine Gasturbine mit Verdichtereinlass, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt.Der Verdichtereinlass ist in Sektoren aufgeteilt, die am Verdichtereintritt an in den Strömungskanal des Verdichters münden, wobei eine Zuführung für Frischluft durch einen ersten Sektor des Verdichtereinlasses führt und eine Zuführung für den ersten Abgasstrom durch einen zweiten Sektor des Verdichtereinlasses führt.

Im Gasturbinenkraftwerk sind der erste Sektor und der zweite Sektor des Verdichtereinlasses beim Anschluss an den Strömungskanal des Verdichters als konzentrische Kreisringe ausgeführt. In diese Sektoren werden die beiden Gasströme möglichst homogen verteilt. Von diesen Sektoren des Verdichtereinlasses treten beide Gasströme möglichst ohne Vermischung und mit homogener Geschwindigkeit in den Verdichter ein.

Im Gasturbinenkraftwerk ist das Flächenverhältnis der Anschlussfläche des ersten Sektors des Verdichtereinlasses an den Strömungskanal des Verdichter zu der Anschlussfläche des zweiten Sektors des Verdichtereinlasses an den Strömungskanal des Verdichter so gewählt, dass es bei Auslegungsbedingungen der Gasturbine gleich dem Verhältnis der Volumenströme von angesaugter Frischluft zu dem rezirkulierten erstem Abgasstrom ist.

Im Gasturbinenkraftwerk ist eine Vielzahl von Zuführungskanälen zur Einleitung des ersten Abgasstroms in den Verdichter in dem Verdichtereinlass auf einem Kreis konzentrisch zur Achse der Gasturbine in Umfangsrichtung verteilt.

Im Gasturbinenkraftwerk ist ein Regelelement vorgesehen, welches eine kontrollierte Zumischung von Frischluft in den rezirkulierten ersten Abgasstrom erlaubt. Dies Regelelement, zu dem Umgebungsluft über eine Leitung oder einen Luftkanal zugeführt wird, ist beispielsweise eine Klappe oder ein Ventil. Um die Druckverluste des Regelelements und der Zuführung sowie der Zumischung zu kompensieren, kann ein Gebläse in der Zuleitung vorgesehen sein.

Um im Verdichter eine bessere Trennung der Ansaugluft von den rezirkulierten Abgasen zu realisieren wird der erste Abgasstrom bevorzugt auf dem äusseren Durchmesser des Verdichtereinlasses einführt und die Frischluft auf dem inneren Durchmesser, da die Dichte der rezirkulierten Abgase aufgrund des CO2 Gehaltes höher als die von Luft ist. Der Dichteunterschied führt im Verdichter aufgrund der Radialkomponente der Strömungsgeschwindigkeit und der damit resultierenden höheren volumenspezifischen Zentrifugalkräfte des Abgases zu einer Schichtung im Verdichter bzw. reduziert die Vermischung von rezirkulierten Abgasstrom und Frischluft im Verdichter.

Typischerweise wird ein Grossteil der Kühlluft einer Gasturbine über Verdichterentnahmestellen von der Aussenwand des Verdichtergehäuses abgezweigt. Werden bei einer derartigen Gasturbine die rezirkulierten Abgase auf dem äusseren Durchmesser des Verdichtereinlasses zugeführt und eine Vermischung mit Frischluft vermieden, werden die rezirkulierten CO2 reichen Abgase im Verdichter entnommen und an der Brennkammer als Kühlgas vorbeigeführt während ein sauerstoffreicher Strom im Verdichter bleibt und vom Verdichteraustritt der Brennkammer zugeführt wird.

Um die Vermischung von erstem Abgasstrom und Frischluft im Verdichter zu reduzieren, wird weiter eine Verdichterschaufel mit Trennbandsegment für eine Gasturbine mit Abgasrezirkulation vorgeschlagen. Diese Verdichterschaufel umfast einen Schaufelfuss und ein Schaufelblatt, wobei zwischen Schaufelfuss und dem freien, dem Schaufelfuss abgewandten Ende des Schaufelblatts, ein Trennbandsegment angeordnet ist. Dies Trennbandsegment bildet typischerweise einen rechten Winkel zur Längsachse der Schaufel. In der normalen Einbauposition bilden die Trennbandsegmente aller Schaufeln einer Verdichterstufe einen im wesentlichen geschlossenen, senkrecht zur Achse der Gasturbine liegenden Kreisring und hemmen im Verdichter eine Vermischung des rezirkulierten ersten Abgasstroms mit Frischluft.

Trennbandsegmente können auf Leit- und auf Laufschaufeln vorgesehen sein. Aufgrund der resultierenden erhöhten Zentrifugalkräfte sind Trennbandsegmente nur auf den Leitschaufeln vorgesehen.

Bei mindestens einer Verdichterstufe werden Trennbandsegmente nur auf den Laufschaufeln vorgesehen und keine Trennbandsegmente auf den Leitschaufeln. Dies kann beispielsweise bei verstellbaren Leitschaufeln vorteilhaft sein, da die Trennbandsegmente der Leitschaufeln bei einem Verstellen der Leitschaufelposition ineinander laufen würden, oder falls sie, um eine Verstellbarkeit zu gewährleisten, gekürzt oder gerundet ausgeführt sind, die aerodynamischen Eigenschaften der Stufe negativ beeinflussen.

Die Trennbandsegmente sind nur bis zur ersten oder bis zur zweiten Verdichterentnahmestelle vorgesehen, da bis dort effektiv, verdichtete sehr sauerstoffarme rezirkulierte Abgase aus dem Verdichter entnommen werden können.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise kann anstelle der Verwendung eines Abgasgebläses ein Booster vorgesehen werden.

Die Erfindung ist für Gasturbinen mit einer Brennkammer sowie für Gasturbinen mit sequentieller Verbrennung, anwendbar.

### KURZE BESCHREIBUNG DER ZEICHNUNGEN

Bevorzugte Ausführungsformen der Erfindung werden im Folgenden anhand der Zeichnungen beschrieben, die zur Erläuterung dienen. In den Zeichnungen zeigen:
- Fig. 1: eine schematische Darstellung eines Gasturbinenkraftwerks mit Rückführung der Abgase nach Stand der Technik;
- Fig. 2: eine schematische Darstellung eines Gasturbinenkraftwerks mit Rückführung der Abgase und koaxialer Einleitung von Abgasen und Frischluft in den Verdichter,
- Fig. 3: eine schematische Darstellung eines geteilten Verdichtereinlasses und Verdichters eines Gasturbinenkraftwerks mit Rückführung der Abgase;
- Fig. 4: eine schematische Darstellung eines Ausschnitts aus Verdichtereinlass und Verdichter einer Gasturbine mit Rückführung der Abgase und Trennbandsegmenten an Verdichterleit- und Verdichterlaufschaufeln;
- Fig. 5: eine schematische Darstellung eines Verdichtereinlass und Verdichters eines Gasturbinenkraftwerks mit Rückführung der Abgase über eine Vielzahl von kreisförmig um die Gasturbinenachse im Verdichtereinlass angeordneten Zuführungskanälen (39),
- Fig. 6: eine schematische Darstellung eines Gasturbinenkraftwerks mit Dampfkühlung.

### WEGE ZUR AUSFÜHRUNG DER ERFINDUNG

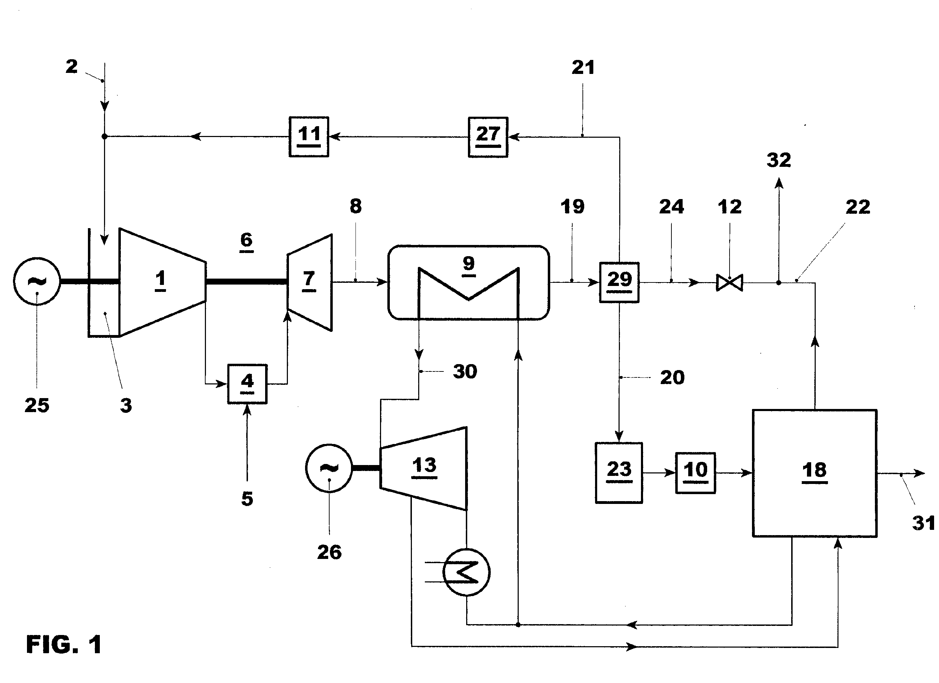

Fig. 1 zeigt in schematischer Darstellung die wesentlichen Elemente eines Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle angeordneten ersten Generator 25 in elektrische Energie umgewandelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird dann zum Beispiel mit einem auf der gleichen Welle angeordneten zweiten Generator 26 in elektrische Energie umgewandelt. Der Wasserdampfkreislauf ist in dem Beispiel vereinfacht und nur schematisch dargestellt. Verschiedene Druckstufen, Speisewasserpumpen usw. werden nicht gezeigt, da diese nicht Gegenstand der Erfindung sind.

Ein Teil der Abgase vom Abhitzedampferzeuger 19 wird bei einer solchen Anlage hinter dem Abhitzedampferzeuger 9 in einem Strömungsteiler 29, welcher geregelt sein kann, in einen ersten Abgasteilstrom 21 und einen zweiten Abgasteilstrom 20 geteilt. Der erste Abgasteilstrom 21 wird in die Ansaugleitung der Gasturbine 6 zurückgeführt und dort mit Frischluft 2 vermischt. Der nicht zurückgeführte zweite Abgasteilstrom 20 wird typischerweise in einem Abgasrückkühler 23 weiter gekühlt und einem CO2-Abscheidsystem 18 zugeführt. Von diesem werden CO2- arme Abgase 22 über einen Kamin 32 an die Umgebung abgegeben. Um die Druckverluste des CO2-Abscheidsystems 18 und der Abgasleitung zu überwinden kann ein Abgasgebläse 10 vorgesehen sein. Das in dem CO2-Abscheidsystem 18 abgeschiedene CO2 31 wird typischerweise komprimiert und zur Lagerung oder weiteren Behandlung abgeleitet. Das CO2-Abscheidsystem 18 wird über eine Dampfextraktion mit aus der Dampfturbine 13 abgezweigtem Dampf versorgt.

Der zweite Abgasteilstrom kann auch direkt über einen Abgasbypass 24 zu dem Kamin 32 geführt werden.

Der zurückgeführte Abgasstrom 21 wird in einem Abgasrückkühler 27, welcher mit Kondensator ausgestattet sein kann, auf etwas über Umgebungstemperatur abgekühlt. Stromab dieses Abgasrückkühlers 27 kann ein Booster oder Abgasgebläse 11 für den Rezirkulationsstrom 21 angeordnet sein. Dieser zurückgeführte Abgasstrom 21 wird mit der Frischluft 2 vermischt, bevor das Gemisch als Ansaugstrom über den VerdichterEinlass 3 der Gasturbine 6 zugeführt wird.

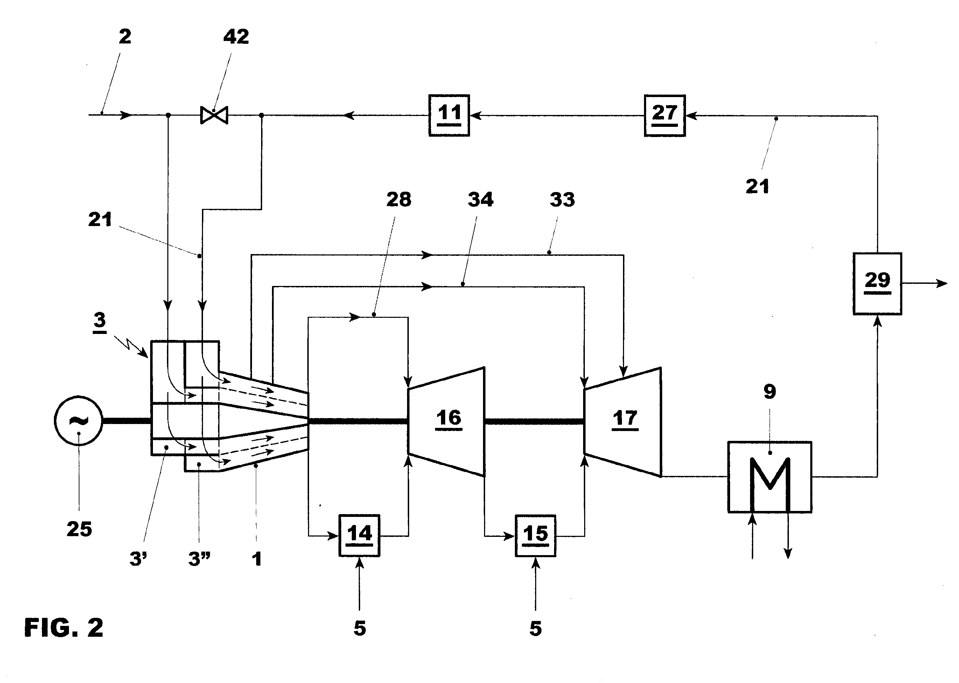

Im Gegensatz zu Fig. 1 ist in Fig. 2 eine Gasturbine mit sequentieller Verbrennung dargestellt. Das Verfahren ist für Gasturbinen mit einer Brennkammer sowie für Gasturbinen mit sequentieller Verbrennung anwendbar. Entsprechend sind auch Ausführungen für Gasturbinen mit einer Brennkammer auszuführen.

Fig. 2 zeigt schematisch ein Gasturbinenkraftwerk mit einem Verdichtereinlass, der in zwei Sektoren aufgeteilt ist, wobei eine Zuführung für Frischluft in einem Frischlufteinlasssektor 3' des Verdichtereinlasses 3 mündet und eine Zuführung für Abgasstrom 21 in den ersten Abgaseinlasssektor 3" des Verdichtereinlasses 3 mündet. Die beiden Einlasssektoren 3', 3" schliessen auf der dem Kompressor zugewandten Seite des Verdichtereinlasses 3 unmittelbar an den Strömungskanal des Verdichters 1 an. Der Frischlufteinlasssektor 3' mündet dabei an eine innere Ringfläche des Strömungskanals und der Abgaseinlasssektor 3" an eine äussere Ringfläche des Strömungskanals

Von der radialen Aussenwand des Verdichters 1 wird Nieder- und Mitteldruck- Kühlgas 33, 34 abgezweigt und den Heissgasteilen der Gasturbine zur Kühlung zugeführt. Weiter wird am Ende des Verdichters von der radialen Aussenwand des Verdichters oder des anschliessenden Diffusors Hochdruck- Kühlgas 28 abgezweigt und den Heissgasteilen der Gasturbine zur Kühlung zugeführt. In den Fig. 2 ist vereinfachend nur eine Kühlgaszuführung zu der Hochdruckturbine 16 und zur Niederdruckturbine 17 dargestellt. Vereinfachend ist eine Kühlgaszuführung zu den Brennkammern 14, 15 nicht dargestellt, wobei die Hochdruckbrennkammer 14 typischerweise mit Hochdruckkühlluft 28 gekühlt wird und die Niederdruckbrennkammer 15 typischerweise mit Mitteldruckkühlluft 34 gekühlt wird. Da die rezirkulierten Abgase in den Aussenbereich des Verdichters geleitet werden, werden diese zu einem grossen Teil als Kühlgas 33, 34, 28 um die Brennkammern 14, 15 herumgeführt, während die sauerstoffreiche Frischluft im Kernbereich des Verdichters 1 bis zum Verdichterende verdichtet wird und in die Hochdruckbrennkammer 14 gelangt. Durch die Trennung der Gaszuführung im Einlass 3 wird ein grosser Anteil an sauerstoffreiche Frischluft in die Brennkammer 14 geleitet. Somit ist auch der Sauerstoffanteil in den Eintrittsgasen der Niederdruckbrennkammer 15 deutlich gegenüber einer Anlage erhöht, bei der die rezirkulierten Abgase 21 mit Frischluft 2 vermischt werden.

Um bei verschiedenen Betriebszuständen der Gasturbine und den damit verbunden Änderungen des Anteils an rezirkuliertem Abgas 21 and der Verdichteransaugmenge eine homogenes Geschwindigkeitsprofil in der Zuströmung zu dem Verdichter zu realisieren, ist in dem in Fig. 2 gezeigten Ausführungsbeispiel ein Regelelement vorgesehen, über das dem ersten Abgasstrom 21 Frischluft 2 zugemischt wird, bevor diese über den zweiten Sektor des Verdichtereinlasses 3" in den Verdichter 1 eingeleitet wird.

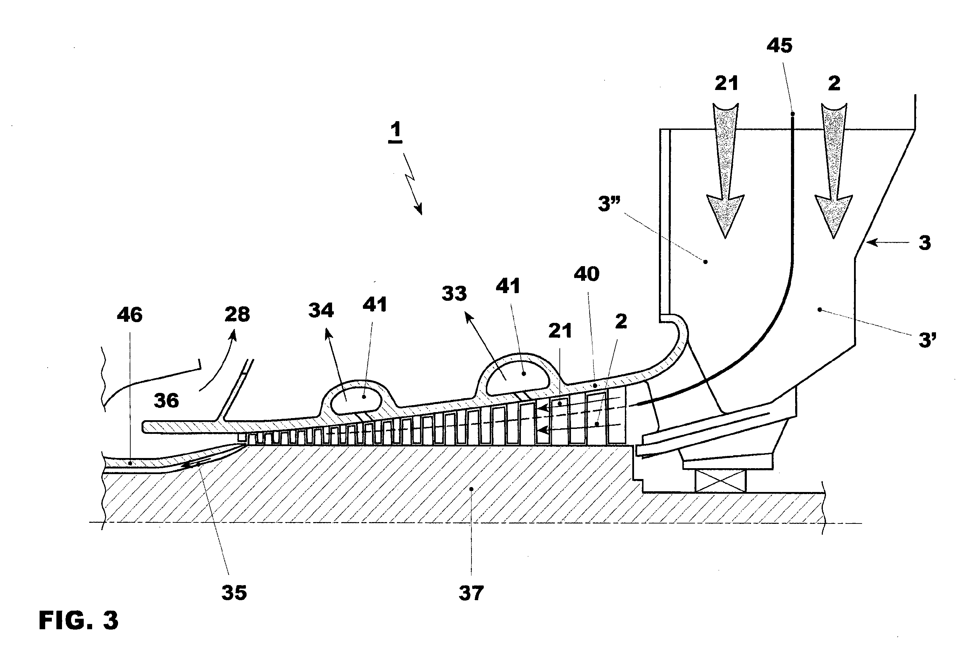

Fig. 3 zeigt schematisch einen geteilten Verdichtereinlasse und Verdichters eines Gasturbinenkraftwerks mit Rückführung der Abgase. In dem gezeigten Beispiel ist der Verdichtereinlass 3 durch ein Einlassleitblech 45 in einen äusseren Verdichtereinlasssektor für Frischluft 3' und einen Verdichtereinlasssektor für rezirkuliertes Abgase 3" geteilt. Diese Teilung des Verdichtereinlasses 3 führt zu einer im wesentlichen koaxialen Einströmung von rezirkuliertem Abgas 21 und Frischluft in den Verdichter 1. In dem gezeigten Beispiel wird die Frischluft 2 durch einen innen, an den Rotor 37 angrenzenden Ringraum im Verdichter 1 verdichtet. Die rezirkulierten Abgase 21 werden in einen aussen an das Verdichtergehäuse 40 angrenzenden Ringraum im Verdichter 1 verdichtet. In dem gezeigten Beispiel wird an zwei stellen des Verdichters 1 Gas für das Sekundärgassystem der Gasturbine 6 über Verdichterentnahmestellen 41 abgezweigt. Das Sekundärgas wird typischerweise zur Kühlung von Heissgasteilen verwendet und je nach Design ausserdem beispielsweise im Lagerbereich als Spül- oder Sperrluft verwendet. Aus der ersten Entnahmestelle 41 wird Niederdruckkühlgas 33 abgezweigt und aus der zweiten Entnahmestelle 41 wird Mitteldruckkühlgas 34 abgezweigt. Aus dem Verdichterplenum 36 wird Hochdruckkühlgas 28 abgezweigt.

Ausserdem wird am Ende des Verdichters 1 zwischen einer Wellenabdeckung 46 und Rotor 37 Rotorkühlgas 35 abgezweigt. Um den Frischluftanteil der Rotorkühlluft 35 zu reduzieren, ist der Verdichtereinlass in 3 koaxiale Sektoren geteilt: je einen äusseren und einen inneren zur Einleitung von rezirkulierten 21 Gasen und einem Mittleren zur Einleitung von Frischluft 2.

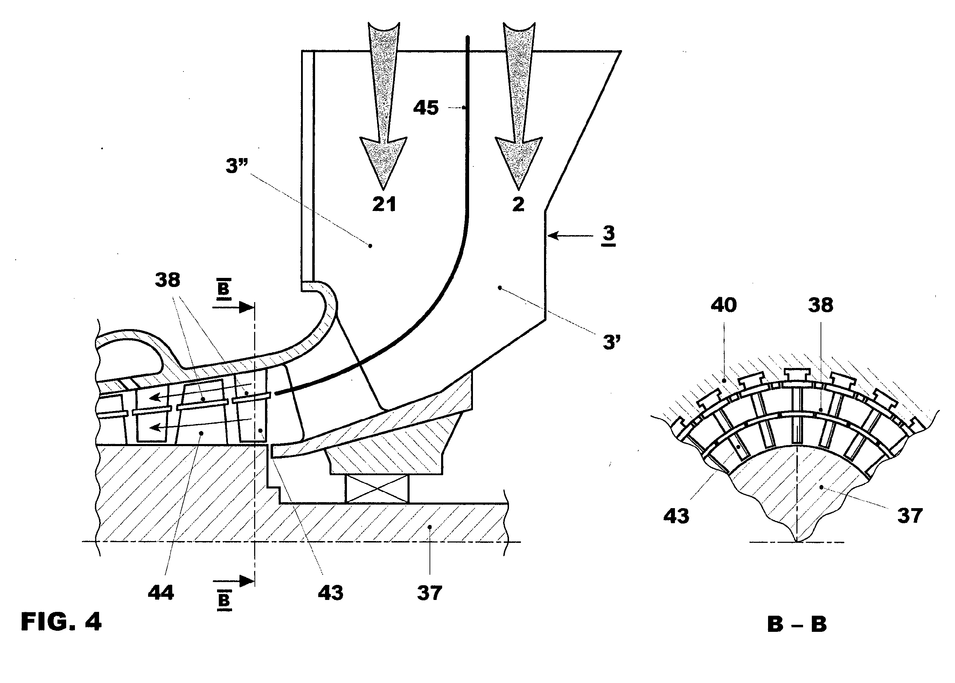

Auch bei einer koaxialen Zuführung von Frischluft 2 und rezirkulierten Abgas 21 kommt es aufgrund von Sekundärströmungen im Verdichter 1 zu einer Vermischung von Frischluft 2 und rezirkulierten Abgas 21. Dies kann den positiven Effekt der separaten Zuführung von Frischluft 2 und rezirkulierten Abgas 21 im Verdichtereinlass reduzieren. Um diese Vermischung im Verdichter 1 zu minimieren ist ein Verdichter mit Schaufeln mit Trennbandsegmente vorgeschlagen. In Fig. 4 ist gezeigt, dass alle Verdichterleitschaufeln 43 und alle Verdichterlaufschaufeln 44 Trennbandsegmente 38 haben, die sich im zusammengebauten Zustand bei jeder Stufe zu einem zusammenhängenden Trennband zusammenfügen.

Im Schnitt B-B ist am Beispiel der ersten Verdichterstufe ein Trennband gezeigt. Bei jeder Laufschaufel ist bei etwa 50% der Höhe des Schaufelblattes ein Trennbandsegment 38 angeordnet, dass sich im Wesentlichen senkrecht zum Schaufelblatt in Radialrichtung erstreckt.

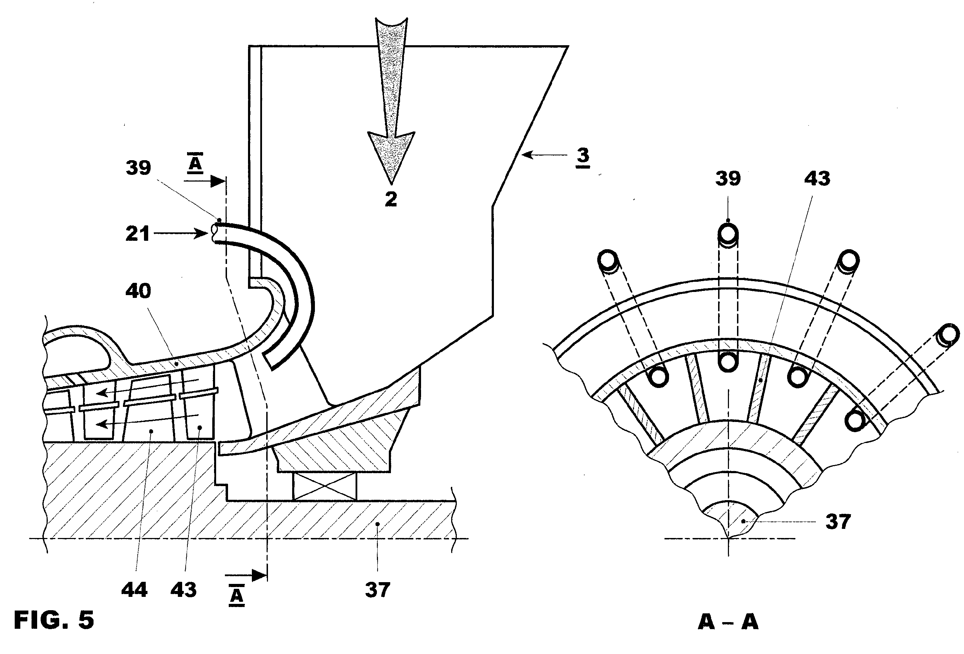

Fig. 5 zeigt eine alternative Zuführung der rezirkulierten Abgase 21. Anstelle einer separaten Zuführung der rezirkulierten Abgase 21 über einen Verdichtereinlasssektor für rezirkulierte Abgase 3" wird ein ungeteilter Verdichtereinlass 3 benutzt, in den die rezirkulierten Abgase 21 über eine Vielzahl von kranzförmig an der Aussenwand des Einlasskanals 3 anordneten Einlasskanälen 39 eingeleitet werden. Als Einlasskanal 39 eignen sich beispielsweise Rohrenden oder Rohrstutzen, deren Austrittsende parallel zur Hauptströmung in Richtung Verdichtereintritt ausgerichtet sind. In dem gezeigten Beispiel reichen die Rohrstutzen bis in die Einlaufdüse (Bellmouth) des Verdichters 1 hinein, um eine Vermischung mit Frischluft 2 zu minimieren.

Die Rohrstutzen können auch noch im eigentlichen Verdichtereinlass enden oder schon an der Wand des Verdichtereinlasses enden. Bevorzugt sollten die Enden ringförmig um die Achse der Gasturbine angeordnet sein.

Eine Vielzahl von Einlasskanälen 39 hat den Vorteil, dass kein Einlassleitblech 45 zur Trennung des Verdichtereinlasses 3 benötigt wird. Dies hat im Betrieb den Vorteil, dass das Verhältnis von Frischluft zu rezirkuliertem Abgas bei unabhängig von dem Flächenverhältnis der Einlasssektoren geändert werden kann.

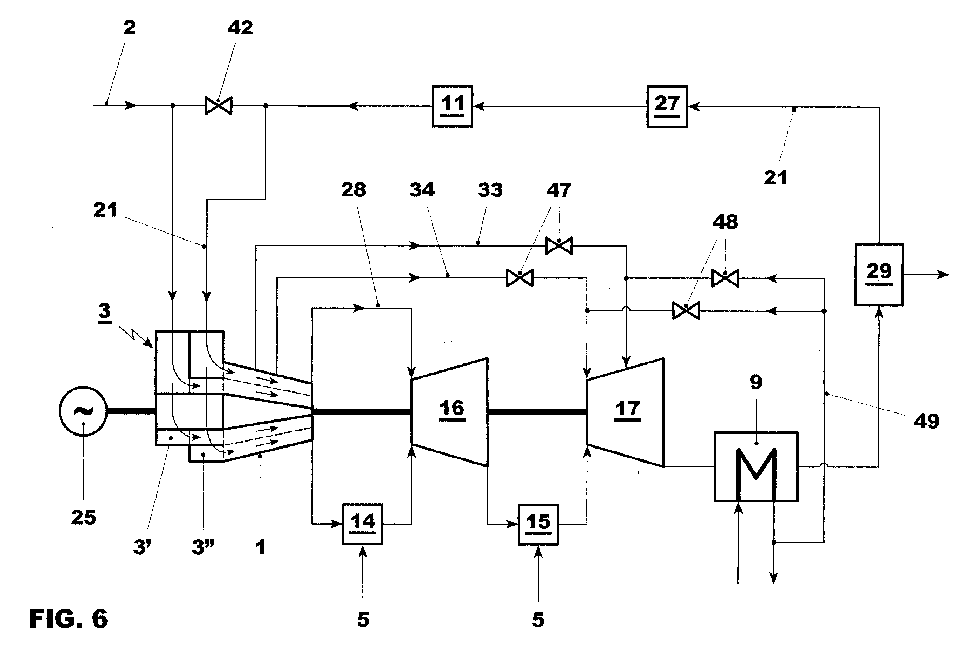

Fig. 6 basierend auf Fig. 2 und zeigt schematisch ein Ausführungsbeispiel bei dem zusätzlich die Einspeisung von Dampf in das Kühlsystem möglich ist. Dafür geht von dem Wasserdamedampfkreislauf eine Dampfleitung 49 ab, die in dem Kühlgassystem der Gasturbine mündet. In dem gezeigten Beispiel ist eine Dampfleitung 49 dargestellt, die in den Leitungen für zur Speisung des Nieder- und Mitteldruck- Kühlgassystems 33 sowie des Hochdruckkühlgassystems 34 verzweigt ist. Alternativ kann auch Dampf mit verschiedenen Druckniveaus aus dem Wasser- Dampfkreislauf oder alternativen Quellen genutzt werden und an die Kühlgasleitungen der Gasturbine mit entsprechenden Druckniveaus eingeleitet werden.

Um zwischen Kühlung mit Dampf oder Verdichterkühlgas bzw. einer Kombination aus beiden kühlen zu können, sind in den Leitungen für Nieder- und Mitteldruck- Kühlgas 34 Kühlgasventile 47 sowie in Dampfleitungen 49 Dampfventile 48 vorgesehen. Wenn die Kühlgasventile 47 geöffnet sind und die Dampfventile 48 geschlossen sind, kann beispielsweise beim Start oder Betrieb mit tiefer Teillast der Gasturbine das Kühlgassystem herkömmlich mit Kühlgas aus dem Verdichter 1 arbeiten. Sobald genügend Dampf verfügbar ist, können die Kühlgasventile 47 geschlossen werden und die Dampfventile 48 geöffnet werden, um eine Dampfkühlung durchzuführen. Die Dampfkühlung kann die Kühlgaskühlung ganz oder teilweise ersetzen. Die Dampfkühlung kann in Kombination mit der in Fig. 6 dargestellten koaxialen Einleitung von rezirkuliertem ersten Abgasteilstrom 21 und Frischluft 2 in den Verdichter 1 realisiert werden oder in Kombination mit einer konventionellen Vermischung von Frischluft 2 und rezirkuliertem ersten Abgasteilstrom 21 vor dem Verdichter 1 realisiert werden (entsprechend Fig. 1; hier nicht dargestellt).

### BEZUGSZEICHENLISTE

- 1: Verdichter
- 2: Frischluft
- 3: Verdichtereinlass
- 3': erster Sektor: Verdichtereinlasssektor für Frischluft
- 3": zweiter Sektor: Verdichtereinlasssektor für rezirkulierte Abgase
- 4: Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum CO2-Abscheidesystem)
- 11: Abgasgebläse für den ersten Abgasteilstrom (Abgasrezirkulation)
- 12: Bypassklappe oder Ventil
- 13: Dampfturbine
- 14: Hochdruckbrennkammer
- 15: Niederdruckbrennkammer
- 16: Hochdruckturbine
- 17: Niederdruckturbine
- 18: CO2-Abscheidesystem
- 19: Abgas vom Abhitzedampferzeuger
- 20: Zweiter Abgasteilstrom (Abgasleitung zum CO2-Abscheidesystem)
- 21: Erster Abgasteilstrom (Abgasrezirkulation)
- 22: CO2-armes Abgas
- 23: Abgasrückkühler (für den zweiten Abgasteilstrom)
- 24: Abgasbypass zum Kamin
- 25: Erster Generator
- 26: Zweite Generator
- 27: Abgasrückkühler (für den ersten Abgasteilstrom)
- 28: Hochdruck- Kühlgas
- 29: Abgasteiler
- 30: Frischdampf
- 31: Abgeschiedenes CO2
- 32: Kamin
- 33: Niederdruck- Kühlgas
- 34: Mitteldruck- Kühlgas
- 35: Rotorkühlgas
- 36: Verdichterplenum
- 37: Rotor
- 38: Trennbandsegment
- 39: Zuführungskanal
- 40: Verdichtergehäuse
- 41: Verdichterentnahmestelle
- 42: Frischluft- Regelelement
- 43: Verdichterleitschaufel
- 44: Verdichterlaufschaufel
- 45: Einlassleitblech
- 46: Wellenabdeckung
- 47: Kühlgasventil
- 48: Dampfventil
- 49: Dampfleitung

## Patentansprüche

1. Verfahren zum Betrieb eines Gasturbinenkraftwerkes mit Abgasrezirkulation, welches eine Gasturbine (6), einen Abhitzedampferzeuger (9) und einen Abgasteiler (29), der die Abgase (19) in einen ersten Abgasstrom (21) zur Rezirkulation in einen Ansaugstrom der Gasturbine (6) und in einen zweiten Abgasstrom (20) zur Abgabe an die Umgebung teilt, umfasst,
**dadurch gekennzeichnet, dass** zur Kühlung von Heissgasteilen der Gasturbine (6) ein sauerstoffarmes Gas, das eine Sauerstoffkonzentration hat, die kleiner ist als die mittlere Sauerstoffkonzentration des Verdichteransaugstroms eines Verdichters (1), aus dem Verdichter (1) abgezweigt wird und in einem offenen Kühlsystem verwendet wird.

2. Verfahren nach Anspruch 1, **dadurch gekennzeichnet, dass** die Abgase der Gasturbine (6) oder ein Gasgemisch, das zu über 50% aus Abgasen der Gasturbine (6) besteht, als Kühlgas verwendet wird.

3. Verfahren nach Anspruch 1, **dadurch gekennzeichnet, dass** Dampf als Kühlgas verwendet wird.

4. Verfahren nach einem der Ansprüche 1 bis 3, **dadurch gekennzeichnet, dass** der erste Abgasstrom (21) ohne Vermischung mit Frischluft in den Verdichtereinlass eingeleitet wird und zur Kühlung von Heissgasteilen mindestens ein Teil des in dem Verdichter komprimierten ersten Abgasstroms (21) als Kühlgas abzweigt wird.

5. Verfahren nach Anspruch 4, **dadurch gekennzeichnet, dass** dem Verdichter der erste Abgasstrom (21) und die Frischluft radial gestuft zugeführt werden.

6. Verfahren nach Anspruch 5, **dadurch gekennzeichnet, dass** dem Verdichter der erste Abgasstrom (21) und die Frischluft über konzentrische Kreisringe zugeführt werden.

7. Verfahren nach Anspruch 6, **dadurch gekennzeichnet, dass** dem Verdichter die Frischluft über einen inneren Kreisring zugeführt wird und der erste Abgasstrom (21) über einen äusseren Kreisring zugeführt wird.

8. Verfahren nach einem der Ansprüche 1 bis 3, **dadurch gekennzeichnet, dass** der erste Abgasstrom (21) über vor dem Verdichterdichtereinlass auf einem Durchmesser des Ansaugkanals in Umfangsrichtung verteilt angeordnete Zuführungen (39) eingeleitet wird.

9. Verfahren nach einem der Ansprüche 1 bis 8, **dadurch gekennzeichnet, dass** bei Teillast und/ oder beim Start der Gasturbine Frischluft über ein Regelelement (42) dem ersten Abgasstrom (21) zugemischt wird, bevor dieser in den Verdichter eingeleitet wird.

## Claims

1. Method for operating a gas turbine power plant with flue gas recirculation, which comprises a gas turbine (6), a heat recovery steam generator (9) and an flue gas splitter (29) which splits the flue gas (19) into a first flue gas flow (21) for recirculation into an inlet flow of the gas turbine (6) and into a second flue gas flow (20) for discharging to the environment,
**characterized in that**, for cooling hot gas parts of the gas turbine (6), an oxygen-depleted gas, which has an oxygen concentration less than the average oxygen concentration of the compressor inlet flow of a compressor (1), is tapped off from the compressor (1) and is used in an open cooling system.

2. Method according to Claim 1, **characterized in that** the flue gas of the gas turbine (6) or a gas mixture, which consists of more than 50% of flue gas of the gas turbine (6), are used as cooling gas.

3. Method according to Claim 1, **characterized in that** steam is used as cooling gas.

4. Method according to one of Claims 1 to 3, **characterized in that** the first flue gas flow (21) is introduced into the compressor intake without mixing with fresh air and for the cooling of hot gases at least a portion of the first flue gas flow (21) which is compressed in the compressor is tapped off as cooling gas.

5. Method according to Claim 4, **characterized in that** the first flue gas flow (21) and the fresh air are fed to the compressor in a radially stepped manner.

6. Method according to Claim 5, **characterized in that** the first flue gas flow (21) and the fresh air are fed to the compressor via concentric annuluses.

7. Method according to Claim 6, **characterized in that** the fresh air is fed to the compressor via an inner annulus and the first flue gas flow (21) is fed via an outer annulus.

8. Method according to one of Claims 1 to 3, **characterized in that** the first flue gas flow (21) is introduced via feeds (39) which are arranged upstream of the compressor intake in a circumferentially distributed manner on a diameter of the intake duct.

9. Method according to one of Claims 1 to 8, **characterized in that** at partial load and/or during start-up of the gas turbine, fresh air is added to the first flue gas flow (21) via a control element (42) before this is introduced into the compressor.

## Revendications

1. Procédé pour faire fonctionner une centrale à turbine à gaz à recirculation des gaz d'échappement qui comprend une turbine à gaz (6), un générateur de vapeur à chaleur perdue (9) et un séparateur de gaz d'échappement (29) qui sépare les gaz d'échappement (19) en un premier flux de gaz d'échappement (21) en vue de la recirculation dans un flux d'admission de la turbine à gaz (6) et en un deuxième flux de gaz d'échappement (20) en vue de l'évacuation dans l'environnement, **caractérisé en ce que** pour le refroidissement de parties de gaz chaud de la turbine à gaz (6) un gaz pauvre en oxygène qui présente une concentration en oxygène inférieure à la concentration moyenne en oxygène du flux d'admission dans le compresseur d'un compresseur (1) est prélevé du compresseur (1) et est utilisé dans un système de refroidissement ouvert.

2. Procédé selon la revendication 1, **caractérisé en ce que** les gaz d'échappement de la turbine à gaz (6) ou un mélange de gaz constitué de plus de 50 % de gaz d'échappement de la turbine à gaz (6) sont utilisés en tant que gaz de refroidissement.

3. Procédé selon la revendication 1, **caractérisé en ce que** l'on utilise de la vapeur en tant que gaz de refroidissement.

4. Procédé selon l'une quelconque des revendications 1 à 3, **caractérisé en ce que** le premier flux de gaz d'échappement (21) est introduit sans mélange avec de l'air frais dans l'entrée du compresseur et pour le refroidissement de parties de gaz chaud au moins une partie du premier flux de gaz d'échappement (21) comprimé dans le compresseur est prélevée en tant que gaz de refroidissement.

5. Procédé selon la revendication 4, **caractérisé en ce que** l'on achemine au compresseur, de manière étagée radialement, le premier flux de gaz d'échappement (21) et l'air frais.

6. Procédé selon la revendication 5, **caractérisé en ce que** l'on achemine au compresseur, par le biais d'anneaux concentriques circulaires, le premier flux de gaz d'échappement (21) et l'air frais.

7. Procédé selon la revendication 6, **caractérisé en ce que** l'on achemine au compresseur l'air frais par le biais d'un anneau circulaire intérieur et le premier flux de gaz d'échappement (21) par le biais d'un anneau circulaire extérieur.

8. Procédé selon l'une quelconque des revendications 1 à 3, **caractérisé en ce que** le premier flux de gaz d'échappement (21) est introduit par le biais de conduites d'alimentation (39) réparties dans la direction périphérique sur un diamètre du canal d'admission avant l'entrée du compresseur.

9. Procédé selon l'une quelconque des revendications 1 à 8, **caractérisé en ce qu'**en cas de charge partielle et/ou au démarrage de la turbine à gaz, de l'air frais est mélangé par le biais d'un élément de régulation (42) au premier flux de gaz d'échappement (21) avant que celui-ci ne soit introduit dans le compresseur.
